**Europäisches Patentamt**

**European Patent Office**

**Office européen des brevets**

(11) Veröffentlichungsnummer: **0 179 741**

**A2**

## (12) EUROPÄISCHE PATENTANMELDUNG

(21) Anmeldenummer: **85810484.7**

(22) Anmeldetag: **21.10.85**

(51) Int. Cl.⁴: **G 03 H 1/04**
**G 03 H 1/18, G 06 K 19/08**

(30) Priorität: **26.10.84 GB 8427102**
**21.12.84 GB 8432328**

(43) Veröffentlichungstag der Anmeldung:
**30.04.86 Patentblatt 86/18**

(84) Benannte Vertragsstaaten:
**BE CH DE FR GB IT LI**

(71) Anmelder: **CIBA-GEIGY AG**
**Klybeckstrasse 141**
**CH-4002 Basel(CH)**

(72) Erfinder: **Holland, David Bruce**
**47 Knutsford Road**
**Wilmslow Cheshire SK9 6JD(GB)**

(72) Erfinder: **Wood, Glenn Peter**
**Normanhurst 7 Broomfield Lane**
**Hale Cheshire(GB)**

(54) **Verfahren zur Erzeugung eines Hologramms.**

(57) Ein Verfahren zur Erzeugung eines silberhalogenidsensibilierten Hologramms mit im allgemeinen zum Substrat parallelen Wellenfronten (Streifen) umfaßt ein holographisches Material einerseits bildweise photographisch mit aktinischem Licht und andererseits holographisch mit Laserlicht zu belichten, wobei der Referenzstrahl in das holographische material auf der dem Objektstrahl gegenüberliegenden Seite eintritt und wobei die photographische und die holographische Belichtung entweder nacheinander oder gleichzeitig erfolgen, und das holographische Material unter Verwendung eines Silberhalogenidentwicklers entwickelt und dann das entwickelte Silber gebleicht wird.

Im fertigen Hologramm zeigt ein Teil des holographischen Bildes beim Betrachten durch Reflektion eine Farbe, die derjenigen des für die holographische Belichtung verwendeten Laserlichtes bei Belichtung während einer angemessenen Zeit verhältnismäßig nahekommt. Jedoch zeigen Bereiche, in denen das photographische Bild vor dem Bleichen derselben vorhanden gewesen wäre, eine Farbe kürzerer Wellenlänge. In diesen Bereichen erfolgte eine stärkere Gesamtbelichtung und daher nach der Behandlung ein stärkeres Schrumpfen der Emulsion. Diese differenzierte Schrumpfung verursacht ein mehrfarbiges Aussehen des holographischen Bildes.

FIG.1.

CIBA-GEIGY AG                    87-15128/1+2/ILF 1365
Basel (Schweiz)


Verfahren zur Erzeugung eines Hologramms.


Die Erfindung betrifft Hologramme des in Sicherheitsinstrumenten, insbesondere in Dokumentenstücken und anderen Dokumentenpapieren,z.B. Scheck-, Bank- und anderen
Identitätskarten gegen Fälschung verwendeten Typs. Hologramme in solchen Instrumenten sind z.B. nicht fälschbare
Muster und Embleme und sind vorzugsweise in weißem Licht
(Tages- und auch künstlichem Licht) sichtbar bzw. lesbar
und dürfen nicht kopierbar sein.

Ein Verfahren zur Erzeugung solcher Hologramme ist bereits in der GB-PA 2 116 908 beschrieben. Gemäß dieser Anmeldung wird ein Denisyuk Reflektionshologramm unter Verwendung von sensibilisiertes Silverhalogenid enthaltendem
holographischem Material hergestellt. Nach Belichtung und
Entwickeln des Hologramms wird dieses fixiert, um unbelichtetes Silberhalogenid zu entfernen, und dann zwecks
Entfernen von entwickeltem Silber gebleicht, wobei das
Fixieren differenziert auf verschiedene Bereiche des
Hologramms angewandt wird. Wie in der GB-PA 2 116 908 beschrieben, verursacht differenziertes Fixieren ein differenziertes Zusammenfallen der Gelatine zwischen den ursprünglichen Interferenzwellenfronten (Interferenzstreifen). Wurde das Hologramm unter Verwendung eines roten
Laserlichtes belichtet, so zeigt das verarbeitete Hologramm beim Betrachten in weißem Licht in den am stärksten fixierten Bereichen ein grünes Bild, während die
Bildfarbe zu den am geringsten fixierten Bereichen hin allmählich in orange bzw. in rot übergeht. Es ist praktisch
unmöglich, diesen allmählichen Wechsel der Bildfarbe beim Kopieren zu wiederholen. Die Herstellung eines mehrfarbigen Hologramms geschieht jedoch bisher nach einem ziemlich unübersichtlichen und ungenauen Verfahren. Wir haben nun ein Verfahren gefunden, nach welchem mehrfarbige Hologramme in gut zu überwachender Weise unter Verwendung einer in erster Linie optischen Methode erzeugt werden können.

Dieses Verfahren nach der Erfindung ist aus dem Wortlaut des Patentanspruchs 1 ersichtlich. Bevorzugte Ausführungsweisen ergeben sich aus den Unteransprüchen.

Ein Beispiel für die letzte Behandlungsstufe im Verfahren nach der Erfindung ist ein Silberbleichverfahrensschritt, bei dem eine Bleichlösung verwendet wird, wobei ein Schrumpfen des im Verfahren verwendeten Silberhalogenidbindemittels in den belichteten Bereichen des Hologramms, infolge des Entfernens von entwickeltem Silber aus dem Bindemittel auftritt.

Ein weiterer Verfahrensschritt nach Unteranspruch 4 umfaßt die Verwendung von Rehalogenierungsbleichen, bei dem nach der Silberentwicklung das unbelichtete Silberhalogenid entfernt wird. Das entwickelte Silber wird dann in Silberhalogenid zurückverwandelt, so daß das Silberhalogenid dann in den belichteten Teilen des holographischen Materials anwesend ist und höchstens in unbedeutendem Maße in die unbelichteten Bereiche diffundiert.

In diesem Falle tritt ein Schrumpfen des Bindemittels in Folge des Entfernens von unbelichtetem Silberhalogenid aus dem Material in denjenigen Bereichen auf, die am wenigsten belichtet werden.

Um gemäß den Arbeitsweisen von Unteransprüchen 5 und 6
klar differenzierte holographische Bilder bei der Verwendung einer rehalogenierenden Bleichung zu erhalten,
muß ein Bleichmittel verwendet werden, das praktisch
keine Diffusion des aus dem entwickelten Silber gebildeten Silberhalogenids verursacht.

Unter photographischer Belichtung wird hierin eine solche
bildweise Belichtung mit aktinischem Licht verstanden,
daß nach einer normalen Schwarzweißverarbeitungsstufe,
die ein Entwickeln unter Verwendung eines Silberhalogenidentwicklers sowie das Fixieren des unbelichteten Silberhalogenids umfaßt, ein Bild des bildweise belichteten Gegenstandes auf dem Material sichtbar wird.

Ein Beispiel eines Lösungsmittelbleichbades ist eine saure
Silberbleiche,     z.B. ein Kaliumdichromatbleichmittel
oder ein Schwefelsäurebleichmittel.

Ein beliebiges Silberhalogenidfixiermittel der üblichen
Art kann zur Durchführung des Fixierens verwendet werden,
z.B. Natrium- oder Ammoniumthiosulfat.

Es ist dabei zu beachten, daß gemäß Anspruch 7, die zur
photographischen Belichtung benutzte aktinische Lichtquelle der gleiche Laser sein kann, der auch für die
holographische Belichtung verwendet wird, und ein und dieselbe Belichtung unter Verwendung eines Laser sowohl eine
photographische als auch eine holographische Belichtung umfassen kann. Doch kann für die photographische Belichtung
auch eine Wolframfadenlampe oder ein Blitzlicht verwendet
werden.

Die holographische Belichtung, bei der der Referenzstrahl
in das holographische Material von der dem Objektstrahl entgegengesetzten Seite her eintritt, ist vorzugsweise eine Denisyuk-Belichtung, bei der der Referenzstrahl durch das holographische Material hindurchgeht, auf den zu photographierenden Gegenstand auftritt und zum holographischen Material hin reflektiert wird.

Beispiele geeigneten holographischen Filmmaterials zur Verwendung im Verfahren nach der Erfindung sind gegebenenfalls bis zu 694 nm rot sensibilisierte Filme, die zusammen mit pulsierenden Rubinlasern zu verwenden sind, optimalerweise bis zu 633 nm rot sensibilisierte Filme zur Verwendung mit Helium-Neon-Lasern oder optimalerweise bis zu 647 nm sensibilisierte Filme zur Verwendung mit Kryptonlasern. Auch zwischen 500 und 600 nm grün sensibilisierte Filme zur Verwendung mit Argonlasern können gebraucht werden.

Die photographische Belichtung kann so angeordnet werden, daß das dafür dienende Licht in das holographische Material auf der gleichen Seite eintritt wie der Referenzstrahl in der holographischen Belichtung, oder daß es in das holographische Material von der entgegengesetzten Seite her eintritt.Vorteilhaft dient als photographische Belichtung eine solche durch ein optisches Muster wie z.B. gemäß Unteranspruch 8 durch einen optischen Vorsatz (Maske), ein optisches Gitter, einen Stufenkeil oder ein photographisches Glasbild.

Die photographische und die holographische Belichtung erfolgen in solcher Weise, daß das photographische und das holographische Bild einander überlappen. Nach dem Entwickeln und der weiteren Verarbeitung des holographischen Materials wird im Hologramm ein holographisches Bild sichtbar, hingegen kein photographisches Bild im üblichen Sinne, da das gesamte Bildsilber gebleicht oder wieder in Silberhalogenid umgewandelt wurde. Beim Betrachten des holographischen Bildes mittels Reflektion zeigt ein Teil desselben eine dem für die holographische Belichtung verwendeten Laserlicht verhältnismäßig nahe kommende Farbe, wenn er während einer angemessenen Zeit belichtet wurde. Wird jedoch eine Lösungsmittelbleichbehandlung in denjenigen Bereichen, in denen das photographische Bild vor dem Bleichen vorhanden gewesen wäre, durchgeführt, so zeigen diese Bereiche eine Farbe kürzerer Wellenlänge. In diesen Bereichen gab es eine vollständiger deckende  Belichtung und nach der Verarbeitung trat eine stärkere Schrumpfung der Gelatine auf, in dem Maße wie mehr Silber entfernt wurde. Diese differenzierte Schrumpfung verursacht ein mehrfarbiges Aussehen des holographischen Bildes.

Die Änderung der Bildfarbe wird in der Filmebene erblickt, während das holographische Bild vor, in oder hinter der Filmebene gelegen erblickt werden kann.

Umfaßt andererseits die Behandlungsfolge nach dem Entwickeln das Fixieren des unbelichteten Silberhalogenids gefolgt von einem rehalogenierenden Bleichen, so ist in den am wenigsten belichteten Bereichen nach dem Entfernen des unbelichteten Silberhalogenids ein stärkeres Schrumpfen der Gelatine erfolgt. Daher zeigen diejenigen Bereiche des Materials, in denen das photographische Bild vor dem Fixieren und dem rehalogenierenden Bleichen nicht vorhanden gewesen wäre, eine Farbe kürzerer Wellenlänge, da in diesen Bereichen eine stärkere Schrumpfung der Gelatine stattgefunden hat.

Die beigefügte Zeichnung dient zur Illustration der Erfindung.

Der zur Illustration der Erfindung dienende holographische Film umfaßt einen Silberhalogenid-sensibilisierten holographischen Film mit einer Durchschnittsgröße der Silberhalogenidkristalle von 0.035 $\mu$m. Die Silberhalogenidkristalle werden durch die Wellenlänge eines pulsierenden Rubinlasers, d.h. 694 nm, rot sensibilisiert. Die Emulsion wurde auf eine untergelegte Polyesterschicht aufgebracht.

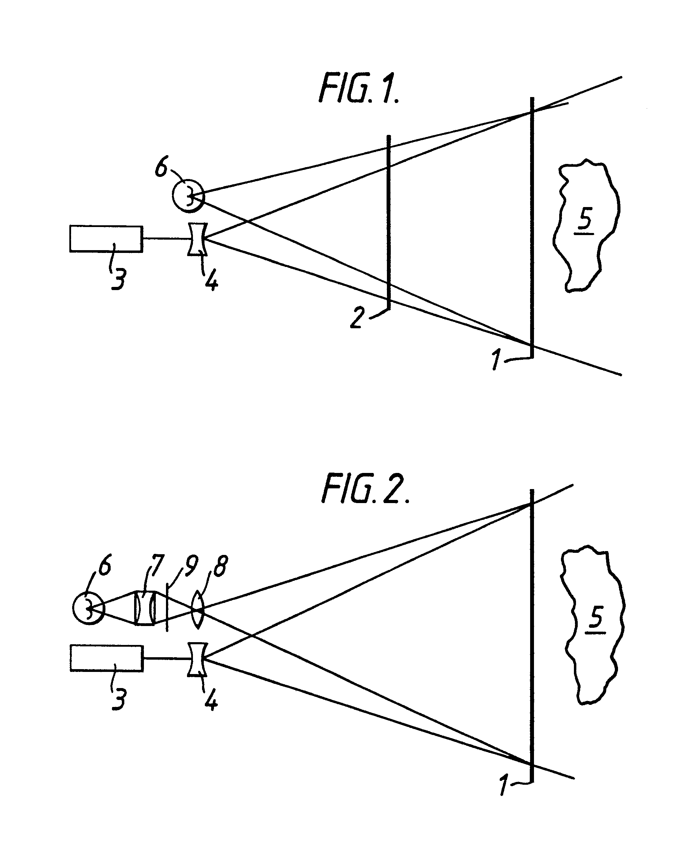

In Fig. 1 wird ein holographischer Film der eben beschriebenen Art gezeigt. Vor dem holographischen Film 1 befindet sich im Abstand davon ein Stufenkeil 2. Ein pulsierender Rubinlaser 3 und eine Zerstreuungslinse 4 beleuchten durch den Film 1 hindurch einen Gegenstand 5, dessen holographisches Bild auf dem holographischen Film aufgenommen werden soll. Weiter ist eine weißes Licht aussendende Wolframfadenlampe 6 vorhanden.

Die folgende Reihe von Belichtungen wurde unter Verwendung eines neuen holographischen Films 1 für jede Folge gemacht.

Folge 1: Der Keil 2 wurde entfernt. Eine Laserbelichtung des Gegenstandes 5 wurde dann unter Verwendung des Lasers 3 ausgeführt. Dies ist eine Denisyuk-Belichtung, da der Laser 3 einen Refrenzstrahl erzeugt, der auf den Gegenstand 5 durch den Film 1 hindurch auftrifft, und ein Bildstrahl vom Gegenstand 5 zurück auf den holographischen Film 1 reflektiert wird.

Um das Maß der optimalen Laserbelichtung zu bestimmen, wurde eine Serie von Belichtungen auf holographischen Filmen gemacht, und die Aufnahmen wurden wie weiter unten beschrieben bearbeitet. Das zur Erzeugung eines roten holographischen Bildes erforderliche Belichtungsmaß wurde vermerkt und dieses Belichtungsmaß wurde in den nachfolgenden holographischen Belichtungen verwendet. Ist das Belichtungsmaß zu niedrig, so wird kein holographisches
Bild erhalten. Ist er zu hoch, so wird ein gelbliches
bis grünes Bild erhalten.

Folge 2: Der Keil 2 wurde versetzt. Der Film 1 wurde dann
mittels der Lampe 6 durch den Keil 2 hindurch belichtet.
Ein geeignetes Belichtungsmaß (Lichtintensität x Belichtungsdauer) wurde aus der bekannten Sensibilisierung des
Filmes errechnet, um im Filmmaterial nach dem Entwickeln
die gleiche Dichte an entwickeltem Silber zu erhalten ,
wie sie bei dem wahrgenommenen optimalen Laser-Belichtungsmaß erreicht wurde.

Folge 3: Mit dem Keil immer noch in seiner alten Stellung
wird der Film mittels der Lampe 6 durch den Keil 2 hindurch
belichtet. Das Belichtungsmaß war das gleiche wie bei der
Folge 2. Der Keil wurde dann entfernt und eine holographische Belichtung des Gegenstandes 5 wurde dann mit Hilfe des Rubinlasers 3 wie in Folge 1 durchgeführt. Das Belichtungsmaß war das gleiche wie in Folge 1.

Folge 4: Mit dem Versetzen des Keils wurde gleichzeitig
eine photographische Belichtung mittels der Lampe 6 und
eine holographische Belichtung mittels des Lasers 3
durchgeführt.

Folge 5: Mit dem Keil immer noch in der gleichen Stellung
wurde eine Laserbelichtung des Gegenstandes 5 mit der
etwa vierfachen Energie der in Folge 1 verwendeten vorgenommen.

Folge 6: Der Keil 2 wurde entfernt und eine Laserbelichtung des Gegenstandes 5 vorgenommen. Der Keil 2 wurde
dann wieder eingesetzt und der Film 1 durch ihn hindurch
mittels der Lampe 6 belichtet. Das Belichtungsmaß war jeweils das gleiche wie in Folge 3.

In Fig. 2 ist ein vorangehend beschriebener holographischer Film 1 gezeigt. Ein pulsierender Rubinlaser 3 und eine Zerstreuungslinse 4 beleuchten durch den Film 1 hindurch einen Gegenstand 5. Der Film kann auch mittels eines aus einer Wolframfadenlampe 6, einer Sammellinse 7 und einer Rejektionslinse 8 bestehenden Projektionsgeräts beleuchtet werden. Das Bild der Transparentvorlage (Diapositiv) 9 kann auf den Film 1 projiziert werden.

Folge 7: Zwecks Belichtung des Fimes 1 wurde auf diesen mittels des Geräts 6-7-8 ein Bild der Transparentvorlage 9 projiziert. Der Film wurde dann durch den Laser 3 belichtet, um ein Hologramm des Gegenstandes 5 zu erhalten. Das Belichtungsmaß war jeweils das gleiche wie in Folge 3.

Folge 8: Der Film 1 wurde durch den Laser 3 belichtet, um ein Hologramm des Gegenstandes 5 zu erhalten. Anschließend wurde ein Bild der Transparentvorlage 9 mittels des Gerätes 6-7-8 auf den Film 1 projiziert. Das Belichtungsmaß war jeweils das gleiche wie in Folge 3.

Alle in den Folgen 1 bis 8 verwendeten holographischen Filme wurden dann während 1 1/2 Minuten bei einer Temperatur von 24°C in einer Silberhalogenidentwicklerlösung entwickelt, die die folgende Formulierung aufwies:

    30g  kristallwasserfreies Natriumsulfit
    10g  Hydrochinon
    60g  kristallwasserfreies Natriumkarbonat mit destilliertem Wasser auf 1000 ml aufgefüllt.

Nach dem Waschen in fließendem Wasser während 5 Minuten wurden die Filme in einer Silberbleichlösung der Zusammensetzung

    20g Ammoniumdichromat
    0.5 ml konz. Schwefelsäure

ad 1000  ml destilliertes Wasser

bei 24°C gebleicht, bis sie klar waren (nach etwa 3 Minuten).

Nach dem Waschen in fließendem Wasser während 5 Minuten ließ man die Filme trocknen, worauf sie geprüft wurden. In keinem der Filme war ein photographisches Bild des Stufenkeils vorhanden.

Das auf den acht Filmen erhaltene holographische Bild wurde unter Beleuchten des Hologramms mit weißem Licht ähnlicher Divergenz wie der ursprüngliche Laserstrahl betrachtet und das folgende beobachtet:

Folge 1: Es war ein rotes Reflektionsbild des Gegenstandes 5 vorhanden.

Folge 2: Es war kein holographisches Bild vorhanden.

Folge 3: Ein holographisches Vielfarbenbild des Gegenstandes 5 war erhalten worden. In denjenigen Bereichen des holographischen Bildes, mit denen die helleren Bereiche des Stufenkeiles überlappt hatten, war die Farbe des Bildes blaugrün. In denjenigen Bereichen des holographischen Bildes, mit denen die dunkelsten Bereiche des Stufenkeils überlappt hatten, war die Farbe des Bildes von der gleichen roten Farbe wie das Bild in der Folge 1. In dazwischen liegenden Bereichen war die Farbe des holographischen Bildes gelbgrün.

Folge 4: Es wurde ein ähnliches Ergebnis wie in Folge 3 beobachtet. Die sehr kurze photographische Laserbelichtung des Stufenkeils ergab einen gegenüber demjenigen nach Folge 3 erhöhten Effekt. Auch wurde auf das holographische Bild ein Schatten geworfen.

Folge 5: Ein holographisches Vielfarbenbild vergleichbar
mit demjenigen nach Folge 4 und mit einiger Schattenbildung im holographischen Bild wurde beobachtet.

Folge 6: Ein holographisches Vielfarbenbild ähnlich dem
in Folge 3 erhaltenen Bild wurde beobachtet.

Folge 7: Ein holographisches Vielfarbenbild ähnlich dem
in Folge 3 erhaltenen Bild wurde beobachtet.

Folge 8: Ein dem in Folge 3 erhaltenen Bild ähnliches
holographisches Vielfarbenbild wurde beobachtet.

In einem zweiten Experiment wurde ein den vorangehend
verwendeten gleicher Film den gleichen Belichtungsfolgen
unterworfen, jedoch wurden die belichteten Filme wie
folgt weiterbehandelt:

Alle in den Folgen 1 bis 8 verwendeten Filme werden anschließend dann während 1 1/2 Minuten bei einer Temperatur
von 24°C mit einer Silberhalogenidentwicklerlösung der Zusammensetzung

    30g kristallwasserfreies Natriumsulfit
    10g Hydrochinon
    60g kristallwasserfreies Natriumkarbonat
ad    1000 ml destilliertes Wasser
entwickelt. Nach 5-minütigem Waschen in fließendem Wasser wurden die Filme während 2 Minuten bei 24°C mit einem
Silberhalogenidfixiermittel der Zusammensetzung

    300g Natriumthiosulfat
ad    1000 ml destilliertes Wasser
fixiert. Nach erneutem Waschen in fließendem Wasser
während 5 Minuten wurden die Filme dann    einer Rehalogenisierung in einer Lösung der Zusammensetzung:

- 11 -                    0179741

    30g Ferrinitrat x 9H$_2$O
     6g Kaliumbromid
ad 1000 ml destilliertes Wasser
unterworfen.


Nach einem abschließenden Waschen in fließendem Wasser
während 5 Minuten ließ man die Filme trocknen, worauf
sie geprüft wurden. In keinem der Filme war ein photographisches Bild vorhanden.


In diesem Falle ergab die optimale Laserbelichtung bei
der Folge 1 ein grünes Reflektionsbild des Gegenstandes
5.


Dieses gleiche Belichtungsmaß wurde für die anderen Laserbelichtungen verwendet. Die photographische Belichtung
wurde wie vorher von dieser optimalen Laserbelichtung
abgeleitet.


Die folgenden Ergebnisse wurden erzielt:


<u>Folge 1</u>: Es wurde ein grünes Reflektionsbild des Gegen-
standes 5 erhalten.


<u>Folge 2</u>: Es war kein holographisches Bild vorhanden.


<u>Folge 3</u>: Es wurde ein holographisches Vielfarbenbild
des Gegenstandes 5 erhalten. In denjenigen Bereichen
des holographischen Bildes, bei denen Überlappung mit den
helleren Bereichen des Stufenkeils vorgelegen hatte, war
das Bild von roter Farbe. In den Bereichen des holographischen Bildes, bei denen Überlappung mit den dunkelsten Bereichen des Stufenkeils vorgelegen hatte, war die
Bildfarbe grün. In den Zwischenbereichen war die Farbe
des holographischen Bildes gelbgrün.

Folge 4: Ein ähnliches Ergebnis wie das in Folge 3 erhaltene wurde beobachtet. Die sehr kurze photographische Laserbelichtungszeit des Stufenkeils erzeugte einen höheren als den in der Folge 3 erhaltenen Effekt. Auch wurde auf das holographische Bild ein Schatten geworfen.

Folge 5: Es wurde ein holographisches Bild beobachtet, ähnlich dem in Folge 4 erhaltenen, mit einiger Schattenbildung im holographischen Bild.

Folge 6: Ein holographisches Vielfarbenbild vergleichbar mit dem in Folge 3 erhaltenen wurde beobachtet.

Folge 7: Ein holographisches Vielfarbenbild ähnlich dem in Folge 3 erhaltenen wurde beobachtet.

Folge 8: Ein holographisches Vielfarbenbild ähnlich dem in Folge 3 erhaltenen wurde beobachtet.

Patentansprüche.

1. Verfahren zur Erzeugung eines silberhalogenidsensibilisierten, im allgemeinen mit dem Substrat parallele
Interferenzwellenfronten (Streifen) aufweisenden Hologramm,
d a d u r c h  g e k e n n z e i c h n e t,
daß ein holographisches Material einerseits bildweise
photographisch mit aktinischem Licht und andererseits
holographisch mit Laserlicht belichtet wird, wobei der
Referenzstrahl in das holographische Material von der
dem Objektstrahl gegenüberliegenden Seite her eintritt,
und wobei die photographische Belichtung und die holographische Belichtung entweder nacheinander oder gleichzeitig mit einer Überlappung der photographischen und
der holographischen Belichtung erfolgen, das holographische Material dann unter Verwendung eines Silberhalogenidentwicklers entwickelt, und anschließend eine Behandlung durchgeführt wird, die ein Schrumpfen des Silberhalogenidbindemittels entweder in den am stärksten belichteten oder in den am schwächsten belichteten Bereichen
des Materials hervorruft.

2. Verfahren nach Anspruch 1, dadurch gekennzeichnet,
daß die ein Schrumpfen des Bindemittels verursachende
Behandlung eine eine Bleichlösung verwendende Silberbleichbehandlung ist.

3. Verfahren nach Anspruch 2, dadurch gekennzeichnet,
daß die Bleichlösung eine wässerige Lösung von Kaliumdichromat in Schwefelsäure ist.

4. Verfahren nach Anspruch 1, dadurch gekennzeichnet, daß die das Schrumpfen des Silberhalogenidbindemittels verursachende Behandlung eine Folge von Behandlungsschritten ist, die ein Silberhalogenidfixieren gefolgt von einem Rehalogenisieren umfaßt, bei welchem das rehalogenisierte Silber keine beachtenswerte Diffusion aufweist.

5. Verfahren nach Anspruch 4, dadurch gekennzeichnet, daß beim rehalogenisierenden Bleichen entweder eine wässerige Lösung von Kaliumferricyanid mit Kaliumbromid oder eine wässerige Lösung eines Ferrisalzes und Kaliumbromid verwendet wird.

6. Verfahren nach Anspruch 4, dadurch gekennzeichnet, daß beim rehalogenisierenden Bleichen eine nichtwässerige Bromlösung oder Bromdämpfe verwendet werden.

7. Verfahren nach einem der Ansprüche 1 bis 6, dadurch gekennzeichnet, daß sowohl die photographische als auch die holographische Belichtung mit Hilfe eines Lasers erfolgen.

8. Verfahren nach einem der Ansprüche 1 bis 6, dadurch gekennzeichnet, daß die photographische Belichtung durch einen optischen Vorsatz erfolgt.

9. Verfahren nach einem der Ansprüche 1 bis 6, dadurch gekennzeichnet, daß die photographische Belichtung durch die Projektion eines Bildes auf das Material ausgeführt wird.

10. Verfahren nach einem der Ansprüche 1 bis 6, dadurch gekennzeichnet, daß als holographische Belichtung eine Denisyuk-Belichtung angewandt wird.

*FIG.1.*

*FIG.2.*